Europäisches Patentamt

European Patent Office

Office européen des brevets

(11) Veröffentlichungsnummer: **0 472 502 B1**

# EUROPÄISCHE PATENTSCHRIFT

(45) Veröffentlichungstag der Patentschrift: **31.05.95**

(51) Int. Cl.⁶: **B01J 2/10**, A61J 3/00

(21) Anmeldenummer: **91810654.3**

(22) Anmeldetag: **20.08.91**

(54) **Verfahren zur Herstellung von Pellets.**

(30) Priorität: **24.08.90 CH 2760/90**

(43) Veröffentlichungstag der Anmeldung:
**26.02.92 Patentblatt 92/09**

(45) Bekanntmachung des Hinweises auf die
Patenterteilung:
**31.05.95 Patentblatt 95/22**

(84) Benannte Vertragsstaaten:
**AT BE CH DE DK ES FR GB GR IT LI LU NL SE**

(56) Entgegenhaltungen:
**DE-A- 2 317 129**
**DE-A- 2 538 267**
**DE-A- 2 924 342**
**DE-A- 3 207 112**
**DE-A- 3 321 716**

(73) Patentinhaber: **SPIRIG AG PHARMAZEUTISCHE PRÄPARATE**
**Froschacker 434**
**CH-4622 Egerkingen (CH)**

(72) Erfinder: **Juch, Rolf-Dieter**
**Schänggelistrasse 32**
**CH-4612 Wangen b. Olten (CH)**
Erfinder: **Birrenbach, Gerd, Dr.**
**Weidweg 693**
**CH-4616 Kappel (SO) (CH)**

(74) Vertreter: **Braun, André, jr.**
**Patentanwalt VSP,**
**Murtengasse 5**
**CH-4051 Basel (CH)**

**Beschreibung**

Die Erfindung betrifft ein Verfahren zur Herstellung von Pellets und die Verwendung einer dafür geeigneten Vorrichtung.

Pellets sind annähernd kugelförmige Körper mit einem Durchmesser von etwa zwischen 0,5 mm bis etwa 2,5 mm und enthalten entweder einen oder mehrere Wirkstoffe, wie z.B. Arzneimittel, Pestizide, Herbizide, Düngemittel, Körperpflegemittel, Reagenzien oder Industriestaub, oder sie können neutrale Träger wie die üblicherweise auf Zucker aufgebauten wirkstofffreien Pellets sein, ohne dabei Zucker oder Stärke zu enthalten.

Die Verabreichung von Arzneimittel enthaltenden Pellets, abgefüllt in Kapseln oder in Tabletten gepresst oder aber in Form von Suspensionen, bringt, verglichen mit herkömmlichen Verabreichungsformen, signifikante therapeutische Vorteile mit sich. Pellets verteilen sich nämlich üblicherweise frei und ungehindert im gastrointestinalen Bereich, optimieren die Arzneimittelresorption in Richtung einer höheren Reproduzierbarkeit von Wirkstoff-Plasmaspiegeln und reduzieren mögliche Nebeneffekte unter fast gänzlicher Vermeidung von lokal schädigenden Konzentrationen des Wirkstoffs, ohne dabei die Bioverfügbarkeit des Wirkstoffs zu verringern.

Ein weiterer Vorteil von Pellets besteht darin, dass man sie ideal mit Hüllen versehen kann, die eine kontrollierte Freisetzung des Wirkstoffs ermöglichen. Die kontrollierte Freisetzung kann in einer Magensaftresistenz und/oder einer verzögerten Wirkstoffabgabe der Pellets bestehen.

Durch die Verwendung von Pellets werden bei der Entwicklung neuer oraler Verabreichungsformen ungeahnte Möglichkeiten eröffnet: Es können ohne weiteres mehrere auch miteinander chemisch nicht kompatible Wirkstoffe in eine Verabreichungsform hineingemischt werden; es können verschiedene Wirkstoffe an verschiedenen Stellen des gastrointestinalen Bereichs freigesetzt werden; und es können Pellets desselben Wirkstoffs mit verschiedenen Freisetzungsraten in einer einzigen Dosierungsform verabreicht werden.

Zusätzlich bieten Pellets aufgrund ihres geringen Verhältnisses von Oberfläche zu Volumen ideale Voraussetzungen für das Auftragen von Hüllen. Die kugelige Form von Pellets, ihre weitgehend einheitliche Grösse und eine glatte Oberfläche begünstigen nach einem derartigen Hüllenaufbau die Reproduzierbarkeit der kontrollierten Wirkstofffreigabe. Ganz anders liegen die Verhältnisse beispielsweise bei Granulaten oder auch mangelhaft ausgerundeten Extrudaten, bei denen die unregelmässige Kornform die Reproduzierbarkeit des Auftragens von Hüllen erschwert, und bei denen grundsätzlich weitaus grössere Auftragsmengen erforderlich sind, um eine komplett geschlossene Hülle aufzubauen.

Die kugelige Form der Pellets hat überdies den Vorteil, dass man aufgrund der guten Fliesseigenschaften einheitliche Volumen und leicht reproduzierbare Füllgewichte bei verschiedenen Verabreichungsformen erhalten kann. Dies gilt insbesondere für die Abfüllung in Hartgelatinekapseln oder auch für das Verpressen zu Tabletten. Voraussetzung ist in allen Fällen, dass Grösse und Dichte der Pellets günstig sind. Im weiteren können Pellets beispielsweise zu Unterscheidungszwecken und aus Akzeptanzgründen eingefärbt werden. Ferner ist auch eine Aromatisierung ohne weiteres möglich.

Pellets können folgenden Aufbau zeigen:

1. Der Wirkstoff kann im Pellet fein verteilt in ein Gerüst eingebettet sein, wobei dieses in der Regel aus Polymeren aufgebaut ist. Die Mischung des Gerüstbildners mit anderen Komponenten und ihre Konzentration bestimmen dabei die kontrollierte Freisetzung;

2. Der Wirkstoff kann schalenförmig um ein vorgebildetes wirkstofffreies Pellet aufgetragen sein;

3. Pellets können aus Agglomeraten des Wirkstoffs aufgebaut sein. Dazu sind meist verschiedene Hilfsstoffe erforderlich.

Zwecks kontrollierter Freisetzung können Pellets der beiden letztgenannten Art umhüllt werden. Die Wirkstofffreisetzung kann über Auflösung der Hülle oder durch Diffusion von gelöstem Wirkstoff durch Poren in der Hülle erfolgen.

Pellets der vorbeschriebenen Art können auch zum Schutz von Wirkstoffen und zum besseren Handling mit einer Hülle versehen werden.

Die Herstellung von Pellets kann auf verschiedenste Art erfolgen. Von praktischer Bedeutung jedoch sind nur wenige Verfahren.

Eine verbreitete Methode der Pelletherstellung besteht in der Verwendung von Dragierkesseln. Diese Einrichtungen sind in der Regel weniger kostenaufwendig als andere Geräte und Maschinen. Pellets entstehen im Dragierkessel direkt aufgrund der rollenden Gutbewegung. Die gewünschte Pelletgrösse erhält man dann in der Regel durch eine Folge von Siebvorgängen.

Nachteil bei der Pelletherstellung im Dragierkessel ist die starke thermische Belastung des Pelletiergutes während langwieriger Trocknungsperioden; dies gilt ganz besonders für den Fall, wenn mit Wasser, wässrigen Lösungen oder wässrigen Dispersionen gearbeitet wird. Zudem ist der Abrieb von Pellets während der Trocknungsphase häufig problematisch, weil dies zu Staubbildung und damit verbunden zu Sicherheitsproblemen für das Personal führen kann. Ausserdem neigen Pellets im Dragierkessel zum Rutschen, was der idealen Rollbewegung diametral entgegengesetzt ist. Häufig beobachtet man auch im Laufe des Herstellungsverfahrens eine Ablagerung von Pelletiergut auf der Kesselinnenseite; auch dieser Materialaufbau führt zu Störungen in der Rollbewegung und zu unvorhersehbaren Materialverlusten.

Um den beschriebenen Nachteilen entgegenzuwirken, ist vielfach eine komplizierte Luftführungstechnik im Dragierkessel erforderlich. Zuluft- wie Abluftsysteme und auch die Anordnung der Sprüheinrichtung und die Mengendurchsätze an Luft sind sehr schwierig zu standardisieren und haben einen direkten Einfluss auf den Herstellungsvorgang und das daraus resultierende Produkt. Es wird deshalb vielfach angestrebt, den Nachteilen langer Verfahrenszeiten durch Einsatz organischer Lösungsmittel entgegenzuwirken. Dafür werden andere Nachteile, wie z.B. eine erhöhte Umweltbelastung oder aber höchst aufwendige Rückgewinnungsverfahren und schliesslich der fast unvermeidliche Gehalt an Restlösemitteln im fertigen Produkt, in Kauf genommen.

Insgesamt ist das Pelletieren im Dragierkessel wegen mangelhafter Reproduzierbarkeit des Verfahrens und nicht zufriedenstellender Homogenität der Pellets wenig geeignet. Zudem müssen den Herstellungsvorgang wegen der unzureichenden Prozesskontrolle und der Schwierigkeit, das Verfahren zu validieren, intensive analytische Arbeiten begleiten; dies verteuert das Verfahren erheblich.

Ein weiteres bekanntes Herstellungsverfahren von Pellets besteht in der Extrudierung der vorbereiteten feuchten wirkstoffhaltigen Pelletiermasse, gefolgt von einer Ausrundung des noch verformbaren Extrudats, anschliessender Trocknung und Fraktionierung.

Zwar gibt es bei diesem Verfahren verschiedene Extrudierarten, doch enthält es immer die drei grundsätzlichen Schritte: Mischen des Wirkstoffs mit eventuellen Hilfsstoffen und Befeuchten; Verdichten durch Extrusion; Ausrunden, z.B. auf einem Spheronizer, da das Extrudat unregelmässige, längliche zylinderförmige Formen aufweist.

Der während des Extrudierens entstehende hohe Druck erzeugt eine grosse Erwärmung der Pelletiermasse und lässt deshalb die Anwendung dieses Verfahren für temperaturempfindliche Wirkstoffe nicht zu. Der aus demselben Grund bedingte hohe und zum voraus nicht berechenbare Flüssigkeitsverlust erschwert die Reproduzierbarkeit des Verfahrens und kann z.B. die Ausrundung des Extrudats sehr erschweren.

Bedingt durch die schlecht reproduzierbare Zusammensetzung des Extrudats und durch die jeweils nur beschränkte Menge an Extrudaten, die auf einem Spheronizer ausgerundet werden kann, ist eine kontinuierliche Produktion von Pellets auf diese Art nur unter sehr erschwerten Bedingungen möglich.

Zudem ist spezialisiertes Personal nötig, um das Extrusionsverfahren erfolgreich zu handhaben.

Auch mittels Wirbelschichttechnologie lassen sich heutzutage Pellets herstellen. Bei sämtlichen dazu verwendbaren Vorrichtungen ist das Standardisieren der Prozessluft von grosser Bedeutung; das richtige Einstellen der Wärme und der Feuchte des Luftstroms ermöglicht zwar die Reproduzierbarkeit des Verfahrens, doch sind die erzeugten Pellets in der Regel porös und vielfach mangelhaft gerundet, was bekanntlich schlechte Voraussetzungen für deren spätere Umhüllung darstellt.

Die grossen Luftmengen, die häufig mit organischen Lösungsmitteln belastet sind, erfordern aufwendige Rückgewinnungsanlagen und verteuern insgesamt das energie- und vorrichtungsmässig an sich schon teure Verfahren. Zudem lassen sich damit meist keine hoch verdichteten Pellets herstellen, was bei hoch zu dosierenden Wirkstoffen für die orale Applikation in der Regel aus Dosierungsgründen wünschenswert wäre.

Des weiteren kann man auch modifizierte Zentrifugiervorrichtungen zur Herstellung von Pellets benützen. Vorteile hierbei sind niedrige Produktionskosten, Flexibilität bezüglich der Betriebsbedingungen und Vereinfachung der Automation. Nachteilig sind jedoch die hohen Kapitalkosten wegen der teuren Maschinen und deren aufwendigen Installation.

Zahlreiche Modifikationen solcher Vorrichtungen sind auf dem Markt erhältlich, doch enthalten in der Regel alle ein Zuluft-Abluftsystem, eine Filtervorrichtung, ein Sprühsystem und Sicherheits- und Kontrollsysteme. Die Eigentümlichkeit des Verfahrens liegt hauptsächlich in der Verwendung einer rotierenden Scheibe. Zentrifugal- und Gravitationskräfte wirken auf das Produkt ein, während ein Befeuchtungsmittel ins Wirbelbett eingesprüht wird. Auf diese Art ist es möglich, aus pulverförmigen Ausgangsprodukten, z.B. Gemischen aus Wirkstoff und Hilfsstoffen, direkt ausgezeichnet gerundete Pellets zu gewinnen, was schnelle Prozesszeiten und geringe Produktverluste nach sich zieht.

Trotz ihres ähnlichen Aufbaus sind diese Vorrichtungen in der Regel sehr produkt- und produktionsspezifisch ausgerüstet, was hohe Investitionskosten bedingt.

Die DE-A 3 207 112 beschreibt eine Vorrichtung und ein Verfahren zur Herstellung von Granulat, in dem das Granuliergut unter Zugabe eines Befeuchtungsmittels durch ein Mischwerkzeug in eine annähernd schraubenförmige Zentrifugalbewegung auf einer Kreisbahn in Bewegungsrichtung des Mischwerkzeugs im Mischbehälter gebracht wird und das Befeuchtungsmittel über eine Düse dem Granuliergut zugeführt wird.

Es ist nun Aufgabe der Erfindung, ein Verfahren zur Herstellung von Pellets zu finden, das die Vorteile von modifizierten Zentrifugiervorrichtungen bezüglich Ausrundung der Pellets, geringer Herstellzeit und guter Reproduzierbarkeit, und gegebenenfalls den Vorteil der hohen Verdichtung, wie er z.B. mittels Extrudierverfahren erreicht wird, aufweist, ohne gleichzeitig die Nachteile der Vorrichtungen und Verfahren des Standes der Technik aufzuweisen. Das Verfahren soll universell auf eine Vielzahl von Wirkstoffen, aufbauend auf wirkstofffreien Pellets oder auf einer Pulvermischung des Wirkstoffs gegebenenfalls mit Hilfsstoffen oder auch auf einer Kombination von beiden, anwendbar sein. Grundsätzlich soll das Verfahren wässrig oder wässrig-alkoholisch durchgeführt werden können.

Es hat sich nun überraschend gezeigt, dass dieses Ziel durch das in Patentanspruch 1 beschriebene Verfahren und die Verwendung der in Patentanspruch 16 beschriebene Vorrichtung erreicht werden kann.

Als Pelletiergut wird mindestens ein Wirkstoff, gegebenenfalls in Kombination mit mindestens einem Hilfsstoff und/oder wirkstofffreien Pellets, Kristallen oder anderen Starterkörnern, bezeichnet.

Die Menge des notwendigen feinvernebelten Befeuchtungsmittels hängt hauptsächlich von der Zusammensetzung des Pelletiergutes ab. Das ideale Mass der Feuchte des Pelletierguts kann man mit dem in der Granuliertechnik verwendeten Begriff der " Schneeball-Konsistenz" umschreiben, was bedeutet, dass eine aus dem Mischer entnommene Probe beim Zusammendrücken in der Hand deren Abdruck beibehält, ohne wieder zu zerfallen.

Der dafür geeignete Feuchtegehalt ist über die Bestimmung der relativen Feuchte im Pelletiergut messbar. Durch geeignete Sensoren, wie elektronische Feuchtefühler (z.B. von Datacontrol, Hersteller Stankowitz Delmenhorst, Deutschland) kann während des Herstellungsverfahrens die Zunahme der relativen Feuchte gemessen werden. Die Pelletbildung setzt bei einer relativen Feuchte des Pelletiergutes von 70% ein, durchläuft ein Maximum im Bereich oberhalb 90% relativer Feuchte und erreicht einen kritischen Zustand bei Werten von ca. 100% relativer Feuchte, bei dem das Pelletiergut zur Verklumpung neigt.

Die Zugabe des Befeuchtungsmittels und die schraubenförmige Zentrifugalbewegung des Pelletierguts auf einer Kreisbahn in Bewegungsrichtung des Mischwerkzeugs werden aufrecht erhalten, bis die Pellets den gewünschten Durchmesser von ca. 0,5 mm bis 2,5 mm, vorzugsweise 0,8 mm bis 1,4 mm, aufweisen. Dann werden die Pellets entweder zuerst getrocknet, was üblicherweise auf Horden in Umluftschränken oder durch Wirbelschichttrocknung geschehen kann, und dann die gewünschte Grössenklasse der Pellets von den Ueberresp. Untergrössen, z.B. durch Siebung, abgetrennt, oder die noch feuchten Pellets werden zuerst in die einzelnen Fraktionen getrennt und dann erst getrocknet. Die Untergrössen können ohne weiteres dem Pelletiergut wieder zugegeben werden, und ebenso nach Zerkleinerung die Uebergrössen, so dass üblicherweise ein Verlust an Pelletiergut von weniger als 10%, und in manchen Fällen sogar weniger als 2% Materialverluste während des Herstellungsverfahrens über mehrere Zyklen entstehen.

Als Befeuchtungsmittel kommen sämtliche bekannten Lösungsmittel in Frage. Ueberraschenderweise hat es sich gezeigt, dass sich selbst die Verwendung von Wasser ausgezeichnet als Befeuchtungsmittel zur Herstellung von Pellets eignet. Auf diese Art lassen sich Sicherheitsprobleme, die bei der Verwendung von organischen Befeuchtungsmitteln entstehen können, und unerwünschte Rückstände der organischen Lösungsmittel in den Pellets vermeiden. Selbstverständlich eignen sich als Befeuchtungsmittel z.B. auch Gemische aus Wasser und Alkoholen.

Vorzugsweise wird das Befeuchtungsmittel kontinuierlich oder diskontinuierlich über das Pelletiergut gesprüht, wobei schnell bewegtes Pelletiergut eine schnellere und langsam bewegtes Pelletiergut eine langsamere Zugabe des Befeuchtungsmittels erfordern. Tröpfchengrösse, Sprühbild und Sprührate sind jeweils dem Pelletiergut resp. dessen Fähigkeit, das Befeuchtungsmittel aufzunehmen, anzupassen, um erfindungsgemässe Pellets zu erhalten.

Der Drehzahlbereich des Mischwerkzeugs kann erfindungsgemäss beträchtlich variieren. Grundsätzlich benötigt die Herstellung von Pellets in grösseren Mischern jedoch geringere Drehzahlen. Ueblicherweise wird das Mischwerkzeug bei Produktionsansätzen des Pelletiergutes bis zu 20 kg in einem Drehzahlbereich von 100 bis 500 Umdrehungen pro Minute und bei Produktionsansätzen von 20 bis etwa 200 kg in einem Drehzahlbereich von etwa 40 bis 200 Umdrehungen pro Minute arbeiten.

Eine Ueberhitzung des Pelletiergutes tritt erfindungsgemäss nicht auf, da Temperaturen von 40 °C nicht überschritten werden und sich in der Regel im Bereich zwischen 25 ° C und 35 ° C bewegen. Selbstverständlich kann man erforderlichenfalls auch bei höheren Temperaturen bis ca. 80 °C arbeiten, wenn der Wirkstoff dies zulässt oder gar erfordert.

Die Zeitdauer zur Herstellung von Pellets im Produktionsmasstab übersteigt in der Regel 360 Minuten nicht und liegt vorzugsweise in einem Bereich zwischen 30 und 120 Minuten, wobei die Zeitdauer im wesentlichen von der Grösse der Produktionscharge abhängt.

Das erfindungsgemässe Herstellungsverfahren ist somit so materialschonend, dass damit auch sehr temperaturempfindliches Pelletiergut verarbeitet werden kann. Die Verwendung eines besonderen Kühlsystems ist normalerweise nicht nötig, bei Bedarf jedoch, z.B. durch Verwendung kühlbarer doppelwandiger Mischer, ohne weiteres möglich.

Die Bildung von Pellets hängt erfindungsgemäss somit hauptsächlich von der Zusammensetzung des Pelletiergutes, der Art und Geschwindigkeit der Bewegung des Pelletiergutes und den physikalisch-chemischen Eigenschaften und der Feuchte des Pelletiergutes ab.

Alle Verfahrensschritte sind einfach auszuführen und zu kontrollieren; haben Uebergrössen und Untergrössen von Pellets die gleiche Zusammensetzung wie das übrige Pelletiergut, können sie ohne grossen analytischen Aufwand wiederverwertet werden.

Ein weiterer Vorteil des Verfahrens besteht darin, dass mindestens ein Teil und vorzugsweise die gesamte Menge des Pelletierguts im Mischer vorgelegt werden kann, wobei dieses Gemisch im Laufe des Verfahrens nicht mehr geändert werden muss, sondern z.B. nur noch mit Wasser besprüht wird.

Beschleunigt werden kann das Verfahren durch Verwendung von Starterkörnern, wie z.B. wiederverwendbaren Untergrössen des Pelletiergutes, Kristallen des Wirkstoffs oder wirkstofffreien Pellets geeigneter Grösse.

Eine weitere Variante des Verfahrens besteht darin, dass man bei Verwendung von Starterkörnern zumindest einen Teil des Pelletierguts unter gleichzeitiger Verwendung eines Befeuchtungsmittels auf die rotierenden Körner kontinuierlich oder diskontinuierlich aufstreut und das schichtweise Auftragen des Pelletierguts bis zur Bildung von Pellets der gewünschten Grösse fortsetzt.

Durch diese Verfahrensvariante wird die Dauer des Herstellungsverfahrens verkürzt und die Ausbeute an Pellets mit annähernd gleichem Durchmesser erhöht.

Bei Verwendung von wirkstofffreien Pellets als Starterkörner können die Ueber- und Untergrössen der Pellets sowie der verbleibende Pulveranteil nach Mahlung und gegebenenfalls Analyse ohne weiteres in die folgenden Herstellungschargen wieder eingebracht werden.

Mit dem erfindungsgemässen Verfahren lassen sich ausgezeichnet gerundete Pellets mit glatter Oberfläche herstellen, was vor allem für das Versehen mit einer Hülle zwecks kontrollierter oder verzögerter Wirkstofffreigabe von grosser Bedeutung ist.

Bei Verwendung von Mischwerkzeugen mit hohen Scherkräften können erfindungsgemäss Pellets von einer vergleichbar hohen Verdichtung wie beim Extrudierverfahren hergestellt werden, ohne dass man die nachteilig hohen Drücke und die damit verbundenen hohen Temperaturen des Extrudierverfahrens in Kauf nehmen muss.

Verglichen mit der Pelletherstellung in Dragierkesseln kann ein beträchtlich grösseres Spektrum an Pelletiergut eingesetzt werden. Das Verfahren ist universell für chemisch und physikalisch verschiedenartigste Wirkstoffe einsetzbar. Wahlweise kann man dabei von pulverförmigen Wirkstoffen, kristallinen Wirkstoffen als Starterkörner oder auch von wirkstofffreien Pellets geeigneter Grösse ausgehen.

Unter Wirkstoffe, die sich erfindungsgemäss für die Pelletierung eignen, fallen Arzneimittel für Mensch und Tier, Pestizide, Herbizide, Düngemittel, Körperpflegemittel, Reagenzien oder auch Industriestaub. Die Wirkstoffe können wasserlöslich, schwach wasserlöslich oder auch nicht wasserlöslich sein.

Das Verfahren kann jedoch auch zur Herstellung von wirkstofffreien Pellets benützt werden, die sich auszeichnen durch Abwesenheit von Zucker und Stärke. Mit dem erfindungsgemässen Verfahren können Pellets mit bis zu 100% Wirkstoffgehalt hergestellt werden. Dies ist ein Vorteil für z.B. hoch zu dosierende Arzneimittel, die üblicherweise in geeignete Hartgelatinekapseln von noch akzeptabler Grösse eingefüllt werden müssen.

Beispiele von Wirkstoffgruppen, die lokal oder systemisch beim Menschen wie auch beim Tier ihre Wirkung entfalten können, sind Parasympathomimetika, Parasympatholytika, Spasmolytika, Sympatholytika, Sympathomimetika, Sedativa, Tranquillantia, Neuroleptika, Antidepressiva, Psychostimulantia, Anorexika, Analgetika, Antirheumatika, Antiepileptika, Antiemetika, Antiarrhythmika, Antihypertensiva, Diuretika, Antitussiva, Bronchospasmolytika, Ulkustherapeutika, Cholagoga, Antihistaminika, Antibiotika, Chemotherapeutika, Anthelminthika, Corticoide, Vitamine, usw. Sie umfassen auch Stoffe zur Behandlung von koronaren Herzerkrankungen, peripheren Durchblutungsstörungen, Venenerkrankungen, Hyperlipidämien etc.

Wasserlösliche Wirkstoffe sind z.B. Kaliumchlorid, Procainamidhydrochlorid, Amphetaminsulfat, Phenmetrazinhydrochlorid, Propanololhydrochlorid, Cimetidinhydrochlorid, Dextromethorphanhydrobromid, Ephedrinhydrochlorid, Prednisolon, Allopurinol, Tetracyclinhydrochlorid usw.

Wirkstoffe mit begrenzter Wasserlöslichkeit sind Erythrityltetranitrat, Acetazolamid, Chlorpropamid, Erythromycin, Bismutsubcitrat, Pyrviniumpamoat, Amoxicillin, Hydrochlorothiazid, Triamteren, Ibuprofen, Piroxicam, Nifedipin, Diclofenac, usw.

Wirkstoffe mit mässig wasserlöslichen Eigenschaften sind Atenolol, Furosemid, Nitrofurantoin, Nicotinsäure, Pankreatin, usw.

Die Wirkstoffe können in Form ihrer freien Base oder Säure, in Form von Komplexen oder pharmazeutisch akzeptablen Salzen, wie z.B. als Hydrochloride, Hydrobromide, Sulfate oder Oleate, oder in Form ihrer Ester, Ether oder Amide verwendet werden.

Als Körperpflegemittel kommt z.B. ATP, als Düngemittel z.B. organisch-mineralischer Dünger, als Herbizid z.B. Mecoprop, als Insektizid z.B. Fenthion, als Industriestaub z.B. Holzstaub in Betracht.

Als Ausgangsstoffe zur Herstellung von wirkstofffreien Pellets können z.B. modifizierte Cellulose, Cellulose, Lactose, Calciumcarbonat, Kaolin, Bariumsulfat, Calciumphosphat, Bentonit, Calciumsulfat, Talk, Mannit, Sorbit, Xylit, Polyacrylate verwendet werden.

Die erfindungsgemäss verwendbaren Wirkstoffe liegen ebenso wie die gegebenenfalls verwendeten Hilfsstoffe und Ausgangsstoffe zur Herstellung von wirkstofffreien Pellets in der Regel in trockener Form vor. Auch in flüssiger Form vorliegende Wirkstoffe können bis zu einer Menge verwendet werden, bei der sie vom übrigen Pelletiergut noch soweit absorbiert werden, dass ein freies Fliessen des Pelletiergutes möglich bleibt.

Die erfindungsgemäss verwendbaren Hilfsstoffe sind aus der Granulier- und Tablettiertechnik bekannt: es handelt sich um Füllstoffe, Bindemittel, Sprengmittel, Gleitmittel, oberflächenaktive Mittel und die Wirkstofffreigabe kontrollierende Mittel, die dem Wirkstoff einzeln oder in gewünschter Kombination zugegeben werden können.

Die Füllstoffe werden dem Pelletiergut hauptsächlich dann zugegeben, wenn es erwünscht ist, die Menge an Wirkstoff zu verringern. Beispiele für Füllstoffe sind vor allem Lactose, Sucrose, Dextrose, Mannitol, Xylit oder andere Zuckeralkohole, Calciumsulfat, Calciumcarbonat, Magnesiumoxid, Kaolin, Cellulose und Stärke, sowie deren Derivate.

Die Einheitlichkeit der Pelletgrösse, die Pelletbildung und die Qualität der Pelletoberfläche werden in wesentlichem Umfang vom Bindemittel mitbestimmt.

Als Bindemittel kommen z.B. Stärke, modifizierte Stärken, Gelatine, Polyvinylpyrrolidone, Cellulose oder Derivate davon, Polyacrylamide, Polyvinylalkohole, und Vinylpyrrolidon-vinylacetat Copolymere in Frage.

Als Sprengmittel, die dem trockenen Pelletiergut zugegeben werden können, eignen sich z.B. verschiedene Formen von Stärken, Cellulosen, Alginaten, pflanzlichen Quellmitteln, Tonerden, Crosspovidon und Ionenaustauscherharze.

Als Gleitmittel können z.B. Stearinsäure, Metallseifen, gehärtete Pflanzenöle, Glyzerinmonostearat, Talcum, Polyethylenglykole und Oele verwendet werden.

Als oberflächenaktive Mittel kommen z.B. Natriumlaurylsulfat, Zuckerester, Natriumdioctylsulfosuccinat, Polyoxyethylensorbitanester, Poloxamere, ethoxylierte Triglyzeride und Lezithine in Frage.

Als die Wirkstofffreigabe beeinflussende Mittel können z.B. Stearinsäure oder Metallseifen, Fettalkohole, gehärtete Pflanzenöle, Polyethylenglykole, oder oberflächenaktive Mittel, wie z.B. Natriumlaurylsulfat, oder Polysorbate, ferner Polyacrylate, Cellulose, Lactose, Sucrose, Natriumchlorid, Maisstärke und Alginsäure benützt werden, wobei die zu verwendende Menge von der gewünschten Freisetzungscharakteristik und der Natur des Mittels abhängt.

Zusätzlich können dem Pelletiergut zulässige Farbstoffe, Lichtschutzmittel, Aromazusätze oder Süsstoffe zugesetzt werden.

Nach dem erfindungsgemässen Verfahren hergestellte Pellets können bis zu 100% Wirkstoff enthalten, falls keine Hilfsstoffe benötigt werden. Sie können auch überhaupt keinen Wirkstoff enthalten, falls man damit wirkstofffreie Pellets herstellen will. Meistens wird dem Pelletiergut jedoch eine gewisse Menge an Hilfsstoffen zugesetzt werden müssen. Erfindungsgemäss hergestellte Pellets können deshalb nebst dem Wirkstoff

- 0% bis 99%, vorzugsweise bis 80% Füllstoffe; und/oder
- 0% bis 20%, vorzugsweise bis 10% Bindemittel; und/oder
- 0% bis 20%, vorzugsweise bis 10% Sprengmittel; und/oder
- 0% bis 20%, vorzugsweise bis 10% Gleitmittel; und/oder
- 0% bis 10%, vorzugsweise bis 5% oberflächenaktive Mittel; und/oder
- 0% bis 99%, vorzugsweise bis 80% die Wirkstofffreigabe verzögernde, gerüstbildende Mittel

enthalten. Die Prozentangaben verstehen sich jeweils bezogen auf das Gewicht des Pelletiergutes sowie der getrockneten Pellets.

Will man zuckerfreie Pellets herstellen, was für Diabetiker von Bedeutung sein kann, nimmt man neben dem Wirkstoff kohlehydratfreie Hilfsstoffe und/oder kohlehydratfreie wirkstofffreie Pellets als Starterkörner.

Das Bindemittel oder ein Gemisch davon kann dem Pelletiergut in trockenem Zustand zugegeben werden und das Pelletiergut erst dann mit dem Befeuchtungsmittel besprüht werden; es kann jedoch auch im Befeuchtungsmittel gelöst dem Pelletiergut zugegeben werden.

Die erfindungsgemäss hergestellten Pellets können auf übliche Art mit einer Hülle versehen werden, in einer geeigneten Flüssigkeit zwecks oraler Verabreichung suspendiert, in Kapseln gefüllt, zu Tabletten gepresst oder in halbfeste Verabreichungsformen zwecks Aufbringen auf die Haut oder Schleimhaut abgefüllt resp. eingearbeitet werden.

Die Vorrichtung zur Durchführung des erfindungsgemässen Verfahrens enthält einen Mischbehälter, dessen Grösse nach der Menge des zu verarbeitenden Pelletierguts gewählt wird. Es sind deshalb Mischbehälter mit einem Volumen von 500 ml, aber auch solche von 1250 l ohne weiteres einsetzbar. Man wird einen Mischbehälter mit einem Volumen von ca. 250 l für einen Ansatz an Pelletiergut von bis zu 40 kg, und einen Mischbehälter mit einem Volumen von ca. 1250 l für einen Ansatz bis zu 250 kg wählen.

Die Form des Mischbehälters und das Mischwerkzeug können sehr mannigfach sein. Ausschlaggebend ist allein, dass die Form des Mischbehälters und das Mischwerkzeug in der Lage sind, das gesamte Pelletiergut in eine schraubenförmige Bewegung entlang der Behälterwandung und in Bewegungsrichtung des Mischwerkzeugs zu versetzen.

Bevorzugte Formen für geeignete Mischbehälter sind deshalb zylinderförmig, kegelstumpfförmig, kegelförmig oder konisch verlaufend oder entsprechende Mischformen; die Oberflächen der Wandungen und des Behälterbodens sind glatt.

Als geeignet haben sich horizontal angeordnete, in geringem Abstand zum Behälterboden um eine vertikal angeordnete Welle rotierende, propellerähnlich gebaute Mischwerkzeuge, die vorzugsweise mindestens dreiflüglig sind und annähernd den ganzen Behälterboden bestreichen, erwiesen.

Der Mischbehälter kann ein Zerhackerwerkzeug enthalten, um mögliche Verklumpungen des Pelletiergutes wieder aufzuschlagen. Es befindet sich vorzugsweise an der Behälterwandung, weil das sich auf einer Kreisbahn im Mischbehälter bewegende verklumpte Pelletiergut durch die auftretenden Zentrifugalkräfte gegen aussen in Richtung Behälterwandung bewegt wird.

Die Vorrichtung kann überdies ein Kühlsystem, z.B. in Form eines doppelwandigen Mischbehälters, und/oder Kontrollvorrichtungen zur automatischen Steuerung des Herstellungsverfahrens oder zur Messung verfahrenstechnischer Parameter enthalten.

Die Erfindung soll anhand der folgenden Beispiele näher erläutert, aber nicht darauf beschränkt werden. Die Prozentangaben sind jeweils auf das Gesamtgewicht der trockenen Formulierung bezogen.

Beispiel 1

Es werden je in einem Ansatz (a) und (b) Pellets mit einem Durchmesser von 0,5 - 2,5 mm, die einen hohen Prozentsatz (bis zu 90 %) wasserlöslichen Wirkstoff (Kaliumchlorid) als Arzneistoff enthalten, mit kontrollierter Wirkstofffreigabe (magensaftresistent) hergestellt.

## Zusammensetzung des Pelletiergutes und der Pellets

| | |
|---|---|
| Kaliumchlorid | 90% |
| Mikrokristalline Cellulose | 6% |
| Povidon (PVP K30) | 4% |

| Verfahrensparameter | (a) | (b) |
|---|---|---|
| Ansatzgrösse kg | 1 | 40 |
| Befeuchtungsmittel | $H_2O$ | $H_2O$ |
| Umdrehung des Mischwerkzeuges U/min | 200 | 90 |
| Sprührate g/min | 5 | 400-100 |
| rel. Feuchte im Gut bei Pelletbildung | 95% | 95% |
| Verfahrensdauer in min | 60 | 90 |
| Ausbeute an Pellets 0,5 bis 2,5 mm | 55% | 80% |

Die pulverförmigen Bestandteile des Pelletiergutes werden im Mischbehälter in eine schraubenförmige Bewegung versetzt. Dann wird mittels eines Sprühsystems Wasser auf die Oberfläche des rotierenden Pelletiergutes gesprüht. Die Sprühraten werden so gewählt, dass zu keiner Zeit grössere Verklumpungen im Pelletiergut entstehen. Nachdem offensichtlich mehr als 75% der Pellets einen Durchmesser von 0,8 mm bis 1,2 mm erreicht haben, wird die Wasserzugabe gestoppt, das Mischwerkzeug zum Stillstand gebracht; die Pellets werden dem Mischbehälter entnommen, im Trockenschrank auf Horden getrocknet und die Ueber- und Untergrössen von der gewünschten Pelletgrösse durch Siebung getrennt.

Die Uebergrössen werden dann zu feinem Pulver gemahlen und zusammen mit den Untergrössen dem Pelletiergut des nächsten Ansatzes zugegeben. Auf diese Art lässt sich das Verfahren wirtschaftlich so optimieren, dass die Verluste an Pelletiergut minimal sind.

Die Pellets werden anschliessend mit einer magensaftresistenten Hülle überzogen, und zwar bis zu 10 % Gewichtsteilen Lacktrockensubstanz bezogen auf das Pelletgewicht.

## Zusammensetzung der Hülle

| | |
|---|---|
| Eudragit$^R$ L 30 D | 47,6 Teile |
| Diethylphthalat | 2,85 Teile |
| Talkum | 2,85 Teile |
| Gereinigtes Wasser | ad 100 Teile |

Die Pellets werden anschliessend in Hartgelatinekapseln gefüllt.

Beispiel 2

Es werden in je einem Ansatz (a) und (b) mit verschiedenen Befeuchtungsmitteln Pellets mit einem Durchmesser von 0,5-2,5 mm, die einen hohen Prozentsatz (bis zu 96%) eines wasserlöslichen Wirkstoffes - hier Tetracyclinhydrochlorid - als Arzneistoff enthalten, mit kontrollierter Wirkstofffreigabe hergestellt.

Das Verfahren aus Beispiel 1 wird wiederholt mit der Ausnahme, dass Tetracyclinhydrochlorid und Polyethylenglykol entsprechend folgender Zusammensetzung verwendet werden:

## Zusammensetzung des Pelletiergutes und der Pellets

| | |
|---|---|
| Tetracyklinhydrochlorid | 96% |
| Polyethylenglykol | 4% |

| Verfahrensparameter | (a) | (b) |
|---|---|---|
| Ansatzgrösse kg | 40 | 40 |
| Befeuchtungsmittel | $H_2O$ | Ethanol/$H_2O$ 70%/30% (v/v) |
| Umdrehung des Mischwerkzeuges U/min. | 90 | 90 |
| Sprührate g/min | 350 – 150 | 350 – 150 |
| rel. Feuchte im Gut bei Pelletbildung | 90% | – |
| Verfahrensdauer in min | 60 | 70 |
| Ausbeute an Pellets 0,5 bis 2,5 mm | 72% | 85% |

In der Variante (b) wird als Befeuchtungsmittel ein Gemisch aus Ethanol/Wasser (70%/30% v/v) eingesetzt; die Ausbeute an Pellets in einem Ansatz kann dadurch gesteigert werden.

Durch die anschliessende Umhüllung mit 10 % Lacktrockensubstanz, bezogen auf das Pelletgewicht, erhält man eine verzögerte Wirkstofffreigabe von 50 % nach 3 Stunden unter in vitro - Bedingungen gemäss USP XXII.

## Zusammensetzung der Hülle

| | |
|---|---|
| Eudragit[R] RL 30 D | 47,6 Teile |
| Diethylphthalat | 2,85 Teile |
| Talkum | 2,85 Teile |
| Gereinigtes Wasser | ad 100 Teile |

Die Pellets werden anschliessend in Hartgelatinekapseln gefüllt.

Beispiel 3

Es werden in je einem Ansatz (a) und (b) verschiedener Grösse Pellets mit einem Durchmesser von 0,5 bis 2,5 mm mit einem Gehalt von 25 % eines lipophilen flüssigen Wirkstoffes - hier $\alpha$-Tocopherol - als Arzneistoff mit einer schützenden Hülle hergestellt.

## Zusammensetzung des Pelletiergutes und der Pellets

| | |
|---|---|
| α-Tocopherol | 25 % |
| Lactose | 12 % |
| Mikrokristalline Cellulose | 60 % |
| Hydroxypropylmethylcellulose | 3 % |

## Verfahrensparameter

| Verfahrensparameter | (a) | (b) |
|---|---|---|
| Ansatzgrösse kg | 30 | 200 |
| Befeuchtungsmittel | $H_2O$ | $H_2O$ |
| Umdrehung des Mischwerkzeuges U/min | 140 | 90 |
| Sprührate g/min | 300 – 100 | 450 – 200 |
| rel. Feuchte im Gut bei Pelletbildung | 97 % | 97 % |
| Verfahrensdauer in min | 65 | 200 |
| Ausbeute an Pellets 0,5 bis 2,5 mm | 94 | 92 |

In diesem Beispiel wird der lipophile flüssige Wirkstoff in einem ersten Schritt an der Oberfläche einer Mischung von Lactose und mikrokristalliner Cellulose durch gleichmässiges Auftragen der Flüssigkeit auf die Pulvermischung adsorbiert. Die trocken erscheinende Mischung zeigt gute Fliesseigenschaften; Hydroxypropylmethylcellulose wird zugefügt. Dann wird wieder analog Beispiel 1 gearbeitet.

Eine abschliessende Umhüllung mit 10 % Lacktrockensubstanz, bezogen auf das Pelletgewicht, verleiht den Pellets dauerhaft frei-fliessende Eigenschaften und gute Stabilität.

## Zusammensetzung der Hülle

| | |
|---|---|
| Methylcellulose (Methocel[R] A15) | 10 Teile |
| Talkum | 10 Teile |
| Gereinigtes Wasser | 80 Teile |

Die Pellets werden in Kapseln gefüllt oder auch in Suspensionen für oralen oder topischen Gebrauch eingebracht.

Beispiel 4

Es werden Pellets mit einem Durchmesser von 0,5 - 2,5 mm, die weniger als 10 % eines schlecht wasserlöslichen Wirkstoffes - hier Dihydroergotaminmesylat, DHETMS - als Arzneistoff enthalten, mit kontrollierter Wirkstofffreigabe hergestellt.

## Zusammensetzung des Pelletiergutes und der Pellets

| | |
|---|---|
| DHETMS | 5 % |
| Mikrokristalline Cellulose | 50 % |
| Lactose | 30 % |
| Eudragit$^R$ RL/NE 30 D | 15 % |

## Verfahrensparameter

| | |
|---|---|
| Ansatzgrösse kg | 50 |
| Befeuchtungsmittel | Eudragit$^R$ RL/NE 30 D in wässriger Suspension |
| Umdrehung des Mischwerkzeuges U/min | 90 |
| Sprührate g/min | 400 - 100 |
| rel.Feuchte im Gut bei Pelletbildung | 85 % |
| Verfahrensdauer in min | 180 |
| Ausbeute an Pellets 0,5 - 2,5 mm | 82 % |

Das Verfahren erfolgt analog Beispiel 1; an Stelle von Wasser wird das Pelletiergut mit der Eudragit-Suspension befeuchtet.

Die kontrollierte Wirkstofffreigabe erfolgt bei diesen Pellets aus ihrem polymeren Gerüst heraus.

Die Pellets werden anschliessend mit geeigneten Hilfsstoffen zu Tabletten verpresst.

Beispiel 5

Es werden Pellets mit einem Durchmesser von 0,5 - 2,5 mm analog Beispiel 4 hergestellt.

## Zusammensetzung des Pelletiergutes und der Pellets

| | |
|---|---|
| DHETMS | 5 % |
| Mikrokristalline Cellulose | 23 % |
| Lactose | 70 % |
| Povidon (Kollidon K 30) | 2 % |

## Verfahrensparameter

| | |
|---|---|
| Ansatzgrösse kg | 25 |

| | |
|---|---|
| Befeuchtungsmittel | $H_2O$ |
| Umdrehung des Mischwerkzeuges U/min | 90 |
| Sprührate g/min | 300 - 100 |
| rel. Feuchte im Gut bei Pelletbildung | 96 % |
| Verfahrensdauer in min | 120 |
| Ausbeute Pellets an 0,5 - 2,5 mm | 92 % |
| Ausbeute Pellets an 0,8 - 1,2 mm | 76 % |

Das Verfahren erfolgt analog Beispiel 1.

Die Pellets werden anschliessend mit einer Hülle mit bis zu 6 % Sacktrockensubstanz, bezogen auf das Pelletgewicht, überzogen, welche die Wirkstofffreigabe kontrolliert.

## Zusammensetzung der Hülle

| | | |
|---|---|---|
| Aquacoat$^R$ | 47,6 | Teile |
| Triethylcitrat | 2,85 | Teile |
| Talkum | 2,85 | Teile |
| Gereinigtes Wasser | ad 100 | Teile |

Die Pellets werden anschliessend in Hartgelatinekapseln gefüllt.

## Beispiel 6

Es werden Pellets mit einem Durchmesser von 0,8 - 1,4 mm, die einen Wirkstoff aus der therapeutischen Gruppe der nichtsteroidalen Antirheumatika (NSAID's) - hier Diclofenac - als Arzneistoff enthalten, mit kontrollierter Wirkstofffreigabe hergestellt.

## Zusammensetzung des Pelletiergutes und der Pellets

| | |
|---|---|
| Diclofenac Natrium | 50 % |
| wirkstofffreie Pellets 0,8 ± 0,2 mm Durchmesser | 40 % |

12

| | |
|---|---|
| Mikrokristalline Cellulose | 5 % |
| Povidon K 30 | 5 % |

**Verfahrensparameter**

| | |
|---|---|
| Ansatzgrösse kg | 65 |
| Befeuchtungsmittel | $H_2O$ |
| Umdrehung des Mischwerkzeuges U/min | 90 |
| Sprührate g/min | 80 – 50 |
| rel.Feuchte im Gut bei Pelletbildung | 82 % |
| Verfahrensdauer in min | 90 |
| Ausbeute an Pellets 0,8 – 1,4 mm | 96 % |

Die wirkstofffreien Pellets werden im Mischbehälter in eine schraubenförmige Bewegung versetzt. Dann wird mittels eines Sprühsystems Wasser auf die Oberfläche der rotierenden Pellets gesprüht. Gleichzeitig wird die Pulvermischung aus Wirkstoff, Cellulose und Povidon mittels einer geeigneten Fördereinrichtung zudosiert. Die Sprühraten und die Pulverzudosierung werden so gewählt, dass zu keiner Zeit grössere Verklumpungen entstehen.

Nachdem die erforderliche Pulvermenge eingebracht ist, wird die Wasserzugabe gestoppt, das Mischwerkzeug zum Stillstand gebracht und die Pellets dem Mischbehälter entnommen, im Trockenschrank auf Horden getrocknet und die Ueber- und Untergrössen mit den Pulveranteilen von der gewünschten Pelletgrösse durch Siebung getrennt.

Eine anschliessende Umhüllung mit 10 % Lacktrockensubstanz, bezogen auf das Pelletgewicht, ergibt eine verzögerte Wirkstofffreigabe von 20 % pro Stunde unter in vitro-Bedingungen gemäss USP XXI.

**Zusammensetzung der Hülle**

| | |
|---|---|
| Eudragit RL 30 D | 47,6 Teile |
| Macrogol 6000 | 4,3 Teile |
| Talkum | 2,85 Teile |
| Gereinigtes Wasser | ad 100 Teile |

Die Pellets werden anschliessend in Hartgelatinekapseln gefüllt.

Beispiel 7

Es werden Pellets mit einem Durchmesser von 1,0 - 1,5 mm, die einen Wirkstoff aus der therapeutischen Gruppe der Beta-Blocker - hier Propanololhydrochlorid - als Arzneistoff enthalten, mit kontrollierter Wirkstofffreigabe hergestellt.

### Zusammensetzung des Pelletiergutes und der Pellets

| | |
|---|---|
| Natriumcitrat (500 nm) | 48 % |
| Propanololhydrochlorid | 48 % |
| Kollidon VA 64 | 4 % |

### Verfahrensparameter

| | |
|---|---|
| Ansatzgrösse kg | 10 |
| Befeuchtungsmittel | $H_2O$ |
| Umdrehung des Mischwerkzeuges U/min | 100 |
| Sprührate g/min | 60 |
| rel.Feuchte im Gut bei Pelletbildung | 80 % |
| Verfahrensdauer in min | 60 |
| Ausbeute an Pellets 1,0 - 1,5 mm | 89 % |

Mit der vorgegebenen Formel und den Verfahrensparametern ist eine hohe Ausbeute an Pellets zu erreichen. Dazu werden im geeigneten Mischer vorgelegt: Natriumcitrat und etwa ein Drittel einer Mischung von Propanololhydrochlorid mit Kollidon VA 64. Mittels eines Sprühsystems wird Wasser auf die Oberfläche des rotierenden Pelletiergutes gesprüht, bis die Ausrundung offensichtlich wird.

Dann wird etwa ein weiteres Drittel der Mischung von Propanololhydrochlorid mit Kollidon VA 64 zugesetzt und weiter gesprüht. Wenn offensichtlich kein Pulveranteil mehr vorliegt, wird das letzte verbleibende Drittel zugefügt und gesprüht, bis sämtliches Pulver zu Pellets aggregiert ist. Pellets in der Grössenordnung 1,0 bis 1,5 mm Durchmesser werden über Siebung abgetrennt und in der Wirbelschicht mit Zuluft von 40 °C getrocknet.

Eine abschliessende Umhüllung mit 10% Lacktrockensubstanz, bezogen auf das Pelletgewicht, ergibt eine verzögerte Wirkstofffreigabe von 50 % nach 3,5 Stunden unter in vitro-Bedingungen gemäss USP XXII.

### Zusammensetzung der Hülle

| | |
|---|---|
| Eudragit[R] RS 30 D | 47,6 Teile |
| Macrogol 6000 | 2,85 Teile |
| Talkum | 1,5 Teile |
| Eisenoxid (rot)-Pigment | 1,5 Teile |
| Gereinigtes Wasser | ad 100 Teile |

Die Pellets werden anschliessend in Hartgelatinekapseln gefüllt.

Beispiel 8

Es werden Pellets mit einem Durchmesser von 0,5 - 0,8 mm, die einen gut wasserlöslichen Wirkstoff - hier Adenosintriphosphat, ATP - als Hautpflegemittel enthalten, mit der Möglichkeit, auch in hoch-viskosen wässrigen Medien den Wirkstoff eingeschlossen zu halten und zu stabilisieren, hergestellt.

## Zusammensetzung des Pelletiergutes und der Pellets

ATP                                                    5 %

Mikrokristalline Cellulose                            40 %


Calciumphosphat                                       50 %

Vorgequollene Stärke (Paselli$^R$ SA2)                 5 %


## Verfahrensparameter


Ansatzgrösse kg                                       2

Befeuchtungsmittel                                   $H_2O$

Umdrehung des Mischwerkzeuges U/min                  210

Sprührate g/min                                      30 - 10

rel. Feuchte im Gut bei Pelletbildung               98 %

Verfahrensdauer in min                              35

Ausbeute an Pellets 0,5 - 0,8 mm                     72 %


Das Verfahren erfolgt analog Beispiel 1.

Zur zusätzlichen Stabilisierung des Wirkstoffes werden die Pellets mit einer Hülle von bis zu 10 % Gewichtsteilen Lacktrockensubstanz, bezogen auf das Pelletgewicht, überzogen.

## Zusammensetzung der Hülle


Hydroxypropylmethylcellulose                    10 Teile

Talkum                                           5 Teile

Gereinigtes Wasser                          ad 100 Teile


Die Pellets werden anschliessend in halbfeste, streichfähige Grundlagen zum Auftragen auf die Haut eingebracht.

Beispiel 9

Es werden Pellets mit einem Durchmesser von 0,5 - 0,8 mm, die als wirkstoff- und zuckerfreie Träger als Starterkörner an Stelle von üblichen zuckerhaltigen wirkstofffreien Pellets Einsatz finden können, hergestellt.

<u>Zusammensetzung des Pelletiergutes und der Pellets</u>

| | |
|---|---|
| Mikrokristalline Cellulose | 25 % |
| Lactose | 75 % |

<u>Verfahrensparameter</u>

| | |
|---|---|
| Ansatzgrösse kg | 100 |
| Befeuchtungsmittel | $H_2O$ |
| Umdrehung des Mischwerkzeuges U/min | 60 |
| Sprührate g/min | 500 - 300 |
| rel.Feuchte im Gut bei Pelletbildung | 96 % |
| Verfahrensdauer in min | 80 |
| Ausbeute an Pellets 0,5 - 0,8 mm | 78 % |

Das Verfahren erfolgt analog Beispiel 1.

Beispiel 10

Es werden Pellets mit einem Durchmesser von 1,0 - 2,0 mm, die organisch-mineralischen Dünger mit verzögerter Wirkstofffreigabe enthalten, hergestellt.

<u>Zusammensetzung des Pelletiergutes und der Pellets</u>

| | |
|---|---|
| Organisch-mineralische Dünger (enthaltend N, P, K) | 85% |
| Hydroxypropylmethylcellulose (Typ: Methocel[R] K 100 M) | 15 % |

<u>Verfahrensparameter</u>

| | |
|---|---|
| Ansatzgrösse kg | 500 |
| Befeuchtungsmittel | $H_2O$ |
| Umdrehung des Mischwerkzeuges U/min | 45 |
| Sprührate g/min | 1000 - 500 |
| rel. Feuchte im Gut bei Pelletbildung | 97 % |
| Verfahrensdauer in min | 210 |
| Ausbeute an Pellets 1,0 - 2,0 mm | 93 % |

Das Verfahren erfolgt analog Beispiel 1.

Beispiel 11

Es werden Pellets mit einem Durchmesser von 1,0 - 2,0 mm, die als Wirkstoff das selektive Herbizid (R, S) -2 -(4-Chlor-o-tolyloxyl)-propionsäure (Mecoprop)- enthalten, hergestellt.

## Zusammensetzung des Pelletiergutes und der Pellets

| | |
|---|---|
| Mecoprop | 10 % |
| Mikrokristalline Cellulose | 28 % |
| Lactose | 60 % |
| Povidon (PVP K 30) | 2 % |

## Verfahrensparameter

| | |
|---|---|
| Ansatzgrösse kg | 500 |
| Befeuchtungsmittel | $H_2O$ |
| Umdrehung des Mischwerkzeuges U/min | 45 |
| Sprührate g/min | 1000 – 500 |
| rel. Feuchte im Gut bei Pelletbildung | 98 % |
| Verfahrensdauer in min | 250 |
| Ausbeute an Pellets 1,0 - 2,0 mm | 90 % |

Das Verfahren erfolgt analog Beispiel 1.

Besondere Vorsichtsmassnahmen bei der Verarbeitung sind erforderlich, um Einwirkungen auf Haut, Augen und Atemwege zu vermeiden.

Die Pellets werden anschliessend in Beutel gefüllt.

Beispiel 12

Es werden Pellets mit einem Durchmesser von 1,0 - 2,5 mm, die als Wirkstoff das Kontaktinsektizid O,O-Dimethyl -O-(3-methyl-4-methyl-thiophenyl)-monothiophosphat, (Fenthion) enthalten, hergestellt.

## Zusammensetzung des Pelletiergutes und der Pellets

| | |
|---|---|
| Fenthion | 10 % |
| Lactose | 17 % |
| Mikrokristalline Cellulose | 70 % |
| Hydroxypropylmethylcellulose | 3 % |

## Verfahrensparameter

| | |
|---|---|
| Ansatzgrösse kg | 500 |
| Befeuchtungsmittel | $H_2O$ |
| Umdrehung des Mischwerkzeuges U/min | 45 |
| Sprührate g/min | 1000 – 500 |
| rel. Feuchte im Gut bei Pelletbildung | 99 % |
| Verfahrensdauer in min | 240 |
| Ausbeute an Pellets 1,0 – 2,5 mm | 88 % |

Das Verfahren erfolgt analog Beispiel 1. Besondere Vorsichtsmassnahmen bei der Verarbeitung sind erforderlich, um Einatmen und Berühren von Haut und Auge zu vermeiden.
Die Pellets werden anschliessend in Dosen gefüllt.

Beispiel 13

Es werden Pellets mit einem Durchmesser von 1,2 - 2,5 mm, die Holzstaub aus Filterrückständen enthalten, zur Weiterverarbeitung in der Bau- und Kunststoffindustrie hergestellt.

## Zusammensetzung des Pelletiergutes und der Pellets

| | |
|---|---|
| Holzstaub, feinst | 95 % |
| Povidon (Kollidon K 30) | 5 % |

## Prozessparameter

| | |
|---|---|
| Ansatzgrösse kg | 600 |
| Befeuchtungsmittel | $H_2O$ |
| Umdrehung des Mischwerkzeuges U/min | 45 |
| Sprührate g/min | 900 |
| rel. Feuchte im Gut bei Pelletbildung | 98 % |
| Verfahrensdauer in min | 180 |
| Ausbeute an Pellets 1,2 - 2,5 mm | 90 % |

Das Verfahren erfolgt analog Beispiel 1; die Trocknung der Pellets wird allerdings vorteilhaft in der Wirbelschicht vorgenommen; eine Fraktionierung der Pellets über Siebung ist nicht erforderlich.

Beispiel 14

Es werden Pellets mit einem Durchmesser von 0,9 - 1,2 mm, die als Reagenz Methylenblau enthalten, hergestellt.

## Zusammensetzung des Pelletiergutes und der Pellets

| | |
|---|---|
| Methylenblau | 5 % |
| Natriumchlorid, Pulver | 92 % |
| Hydroxypropylmethylcellulose | 3 % |

## Verfahrensparameter

| | |
|---|---|
| Ansatzgrösse kg | 300 |
| Befeuchtungsmittel | $H_2O$ |
| Umdrehung des Mischwerkzeugs U/min | 50 |
| Sprührate g/min | 600 - 150 |
| rel. Feuchte im Gut bei Pelletbildung | 92 % |
| Verfahrensdauer in min | 270 |
| Ausbeute an Pellets 0,9 - 1,2 mm | 78% |

Das Verfahren erfolgt analog Beispiel 1.

Die Pellets werden für eine bessere Handhabung mit einer schützenden Hülle überzogen, und zwar bis zu 2 % Gewichtsteilen Lacktrockensubstanz, bezogen auf das Pelletgewicht.

## Zusammensetzung der Hülle

| | | |
|---|---|---|
| Hydroxymethylpropylcellulose | | 7,5 Teile |
| Talkum | | 7,5 Teile |
| Gereinigtes Wasser | ad 100 | Teile |

Die Pellets werden anschliessend in Dosierbeutel gefüllt.

**Patentansprüche**

1. Verfahren zur Herstellung von Pellets, in dem das Pelletiergut unter Zugabe eines Befeuchtungsmittels durch ein Mischwerkzeug in eine annähernd schraubenförmige Zentrifugalbewegung auf einer Kreisbahn in Bewegungsrichtung des Mischwerkzeugs im Mischbehälter gebracht wird, dadurch gekennzeichnet, dass das gegebenenfalls ein Bindemittel enthaltende feinvernebelte Befeuchtungsmittel bis zu einer relativen Feuchte von mindestens 70% und höchstens 100%, gemessen im Pelletiergutstrom, kontinuierlich oder diskontinuierlich aufgebracht und die Agglomeration des Pelletiergutes so lange in Gang gehalten wird, bis man Pellets von 0,5 mm bis 2,5 mm, bevorzugt 0,8 mm bis 1,4 mm, Durchmesser erhält.

2. Verfahren nach Patentanspruch 1, dadurch gekennzeichnet, dass das Pelletiergut mindestens einen Wirkstoff und gegebenenfalls mindestens einen Hilfsstoff enthält und dass mindestens ein Teil, vorzugsweise aber die Gesamtmenge des Wirkstoffs und/oder gegebenenfalls des Hilfsstoffs im Mischbehälter vorgelegt wird.

3. Verfahren nach Patentanspruch 1 oder 2, dadurch gekennzeichnet, dass der Wirkstoff und gegebenenfalls mindestens ein Hilfsstoff auf wirkstofffreie Pellets, Kristalle oder andere Starterkörner aufgetragen werden.

4. Verfahren nach einem der Patentansprüche 1 bis 3, dadurch gekennzeichnet, dass der Wirkstoff und gegebenenfalls mindestens ein Hilfsstoff auf im Mischbehälter rotierende Starterkörner kontinuierlich oder diskontinuierlich aufgestreut und gleichzeitig mit einem gegebenenfalls ein Bindemittel enthaltenden Befeuchtungsmittel besprüht werden.

5. Verfahren nach einem der Patentansprüche 1 bis 4, dadurch gekennzeichnet, dass man die erhaltenen Pellets wahlweise zuerst trocknet und dann die gewünschte Grösse von vorzugsweise 0,8mm bis 1,4 mm durch Siebung von Untergrössen und Uebergrössen trennt oder die Trocknung der Siebung folgen lässt.

6. Verfahren nach einem der Patentansprüche 1 bis 5, dadurch gekennzeichnet, dass das Mischwerkzeug bei Ansätzen an Pelletiergut von bis zu 20 kg in einem Drehzahlbereich von 100 bis 500 Umdrehungen pro Minute und bei Ansätzen über 20 kg in einem Drehzahlbereich von 40 bis 200 Umdrehungen pro Minute arbeitet.

7. Verfahren nach einem der Patentansprüche 1 bis 6, dadurch gekennzeichnet, dass die relative Feuchte sich in einem Bereich von 85% bis 95%, vorzugsweise 90%, bewegt.

8. Verfahren nach einem der Patentansprüche 1 bis 7, dadurch gekennzeichnet, dass die Verfahrenstemperatur nicht über 40° C steigt und sich vorzugsweise im Bereich von 25° bis 35° C bewegt.

9. Verfahren nach einem der Patentansprüche 1 bis 8, dadurch gekennzeichnet, dass die Zeitdauer des Verfahrens 360 Minuten nicht übersteigt und sich vorzugsweise zwischen 30 und 120 Minuten bewegt.

10. Verfahren nach einem der Patentansprüche 1 bis 9, dadurch gekennzeichnet, dass man die Uebergrössen nach deren Zerkleinerung und/oder die Untergrössen einer folgenden Produktionscharge zusetzt.

11. Verfahren nach einem der Patentansprüche 1 bis 10, dadurch gekennzeichnet, dass der Wirkstoff wasserlöslich, schwach wasserlöslich oder wasserunlöslich ist.

12. Verfahren nach einem der Patentansprüche 1 bis 11, dadurch gekennzeichnet, dass als Hilfsstoff mindestens ein Füllmittel und/oder Bindemittel, Sprengmittel, Gleitmittel, oberflächenaktives Mittel, Farbstoff, Aroma oder Süsstoff eingesetzt wird.

13. Verfahren nach einem der Patentansprüche 1 bis 12, dadurch gekennzeichnet, dass als Befeuchtungsmittel Wasser allein oder in Kombination mit einem organischen Lösungsmittel, vorzugsweise einem niedrigen Alkohol, verwendet wird.

14. Verfahren nach einem der Patentansprüche 1 bis 13, dadurch gekennzeichnet, dass man als Hilfsstoff ein die Wirkstoffabgabe verzögerndes Mittel zugibt, das man dem Pelletiergut direkt oder dem Befeuchtungsmittel zumischt.

15. Anwendung des Verfahrens nach einem der Patentansprüche 1 bis 14 zur Herstellung von mit einem Überzug versehenen Pellets, hochverdichteten Pellets oder wirkstofffreien Pellets.

16. Verwendung einer Vorrichtung zur Durchführung der Verfahren gemäss einem der Patentansprüche 1 bis 15, enthaltend einen mindestens 500 ml grossen Mischbehälter, ein Mischwerkzeug, das mindestens drei horizontal angeordnete, annähernd den gesamten Behälterboden in geringem Abstand dazu bestreichende propellerähnliche Flügel, die an einer vertikal angeordneten Welle befestigt sind und eine oder mehrere zum Aufbringen des Befeuchtungsmittels geeignete Düsen aufweist.

17. Verwendung nach Patentanspruch 16, dadurch gekennzeichnet, dass die Form des Mischbehälters zylinderförmig, kegelstumpfförmig, kegelförmig oder konisch verläuft oder Mischformen davon darstellt, und die Oberflächen der Wandungen und des Behälterbodens glatt sind.

18. Verwendung nach Patentanspruch 16 oder 17, dadurch gekennzeichnet, dass der Mischbehälter ein Zerhackerwerkzeug an der Behälterwandung im dichtesten Materialstrom aufweist.

19. Verwendung nach einem der Patentansprüche 16 bis 18, enthaltend ein Kühlsystem und/oder Kontrollvorrichtungen zur Messung verfahrenstechnisch zweckmässiger Verfahrensparameter und/oder zur automatischen Steuerung des Herstellungsverfahrens.

## Claims

1. A process for the production of pellets, whereby the material to be pelletized is passed under addition of a wetting agent through a mixer with an approximately helical centrifugal motion in an orbit in the direction of motion of the mixer in the mixing vessel characterized in that a finely nebulized wetting agent, which may contain a binder, is applied to said material by continuous or batchwise application until the relative moisture content is at least 70% and at most 100%, measured in the stream of material, the agglomeration of said material is maintained until pellets with a diameter of 0.5 mm to 2.5 mm, preferably 0.8 mm to 1.4 mm, are obtained.

2. A process according to claim 1, characterized in that the material to be pelletized contains at least one active ingredient and may contain at least one auxiliary, and in that at least part, but preferably the whole amount, of the active ingredient and/or, if appropriate, the auxiliary is initially introduced into the mixing vessel.

3. A process according to claim 1 or 2, characterized in that the active ingredient and, if appropriate, at least one auxiliary are applied to pellets, crystals or other initiating particles which are free from active ingredient.

4. A process according to any one of claims 1 to 3, characterized in that the active ingredient and, if appropriate, at least one auxiliary are sprinkled continuously or batchwise on to initiating particles rotating in the mixing vessel and are simultaneously sprayed with a wetting agent which may contain a binder.

5. A process according to any one of caims 1 to 4, characterized in that either the pellets obtained are first dried and the desired size of preferably 0.8 mm to 1.4 mm is then separated from undersizes and oversizes by sieving, or sieving is followed by drying.

6. A process according to any one of caims 1 to 5, characterized in that the mixer operates in the speed range from 100 to 500 rpm when the batches of material to be pelletized are up to 20 kg and in the speed range from 40 to 200 rpm when the batches are over 20 kg.

7. A process according to any one of caims 1 to 6, characterized in that the relative moisture content varies in the range from 85% to 95% and is preferably 90%.

8. A process according to any one of caims 1 to 7, characterized in that the process temperature does not exceed 40°C and preferably varies in the range from 25° to 35°C.

9. A process according to any one of claims 1 to 8, characterized in that the duration of the process does not exceed 360 minutes and preferably varies between 30 and 120 minutes.

**10.** A process according to any one of claims 1 to 9, characterized in that the oversizes, after comminution, and/or the undersizes are added to a subsequent production charge.

**11.** A process according to any one of claims 1 to 10, characterized in that the active ingredient is soluble, sparingly soluble or insoluble in water.

**12.** A process according to any one of claims 1 to 11, characterized in that at least one filler and/or binder, disintegrating agent, lubricant, surface-active agent, colour, flavouring or sweetener is used as the auxiliary.

**13.** A process according to any one of claims 1 to 12, characterized in that water, by itself or in combination with an organic solvent, preferably a lower alcohol, is used as the wetting agent.

**14.** A process according to any one of claims 1 to 13, characterized in that an agent delaying the release of the active ingredient, which is mixed directly with the material to be pelletized or with the wetting agent, is added as the auxiliary.

**15.** Application of the process according to any one of claims 1 to 14 to the production of pellets comprising a coating, highly compressed pellets or pellets which are free from active ingredient.

**16.** Use of a device for the realization of the processes according to any one of claims 1 to 15, comprising a mixing vessel of at least 500 ml in size and a mixer which has at least three horizontally arranged propeller-like blades fixed to a vertically arranged shaft and sweeping approximately the whole of the vessel floor with a small clearance, and has one or more nozzles suitable for applying the wetting agent.

**17.** Use according to claim 16, characterized in that the mixing vessel has a cylindrical, frustoconical or conical shape or a mixture of these shapes, and the surfaces of the walls and the vessel floor are smooth.

**18.** Use according to claim 16 or 17, characterized in that the mixing vessel has a chopper on the vessel wall in the densest stream of material.

**19.** Use according to any one of claims 16 to 18 containing a cooling system and/or monitoring devices for the measurement of technologically useful process parameters and/or for automatic control of the production process.

**Revendications**

**1.** Procédé de fabrication de pellets dans lequel la matière à transformer en pellets est transportée par un outillage de mélange, avec adjonction d'un agent d'humidification, par un mouvement centrifuge sensiblement hélicoïdal, suivant une trajectoire circulaire, dans la direction du mouvement de l'outillage de mélange, caractérisé en ce que l'agent d'humidification finement vaporisé, contenant éventuellement un liant, ayant une humidité relative d'au moins 70% et d'au plus 100%, est introduit d'une manière continue ou discontinue dans le courant de matière à transformer en pellets et en ce que l'agglomération de la matière à transformer en pellets est poursuivie dans le temps assez longtemps jusqu'à ce que l'on obtienne des pellets ayant un diamètre allant de 0,5 mm à 2,5 mm et de préférence de 0,8 mm à 1,4 mm.

**2.** Procédé suivant la revendication 1 caractérisé en ce que la matière à transformer en pellets comporte au moins une matière active et éventuellement au moins une matière auxiliaire et en ce qu'au moins une partie et de préférence la totalité de la quantité de la matière active et/ou éventuellement de la matière auxiliaire est introduite préalablement dans le récipient de mélange.

**3.** Procédé suivant l'une quelconque des revendications 1 ou 2 caractérisé en ce que la matière active et éventuellement au moins une matière auxiliaire sont chargées sur des pellets , des cristaux ou d'autres grains de départ exempts de matière active.

4. Procédé suivant l'une quelconque des revendications 1 à 3 caractérisé en ce que la matière active et éventuellement au moins une matière auxiliaire sont répandues, d'une manière continue ou discontinue, sur des grains de départ tournant dans le récipient de mélange et elles sont simultanément aspergées avec un agent d'humidification contenant éventuellement un liant.

5. Procédé suivant l'une quelconque des revendications 1 à 4 caractérisé en ce que les pellets obtenus sont tout abord séchés et sont ensuite séparés, par tamisage, des pellets de diamètres inférieur et supérieur pour obtenir la grosseur désirée allant de préférence de 0,8 mm à 1,4 mm, ou bien le séchage des pellets a lieu après le tamisage.

6. Procédé suivant l'une quelconque des revendications 1 à 5 caractérisé en ce que l'appareil de mélange fonctionne dans une plage de vitesse de rotation allant de 100 à 500 tours par minute dans le cas d'apports de matière à transformer en pellets allant jusqu'à 20 kilogrammes et il fonctionne dans une plage de vitesse de rotation allant de 40 à 200 tours par minute dans le cas d'apports de matière à transformer en pellets supérieurs à 20 kilogrammes.

7. Procédé suivant l'une quelconque des revendications 1 à 6 caractérisé en ce que l'humidité relative est comprise dans une plage allant de 85% à 95% et elle est de préférence de 90%.

8. Procédé suivant l'une quelconque des revendications 1 à 7 caractérisé en ce que la température du procédé ne s'élève pas au-dessus de 40°C et elle est de préférence comprise dans la plage allant de 25° à 35°C.

9. Procédé suivant l'une quelconque des revendications 1 à 8 caractérisé en ce que la durée du procédé ne dépasse pas 360 minutes et elle est comprise de préférence entre 30 et 120 minutes.

10. Procédé suivant l'une quelconque des revendications 1 à 9 caractérisé en ce qu'on ajoute, à une charge de production suivante, les pellets de trop grand diamètre, après leur pulvérisation, et/ou les pellets de trop petit diamètre.

11. Procédé suivant l'une quelconque des revendications 1 à 10 caractérisé en ce que la matière active est soluble dans l'eau, faiblement soluble dans l'eau ou non soluble dans l'eau.

12. Procédé suivant l'une quelconque des revendications 1 à 11 caractérisé en ce qu'on utilise, en tant que matière auxiliaire, au moins une matière de remplissage et/ou un agent de liaison, un explosif, une matière de glissement, un agent tensioactif, une matière colorante, un arôme ou de la saccharine.

13. Procédé suivant l'une quelconque des revendications 1 à 12 caractérisé en ce qu'on utilise, en tant qu'agent d'humidification, de l'eau seule ou en combinaison avec un solvant organique, de préférence un alcool inférieur.

14. Procédé suivant l'une quelconque des revendications 1 à 13 caractérisé en ce qu'on ajoute, en tant que matière auxiliaire, un agent retardant la délivrance de la matière active que l'on mélange à l'agent d'humidification ou directement à la matière à transformer en pellets .

15. Utilisation du procédé suivant l'une quelconque des revendications 1 à 14 pour la fabrication de pellets pourvus d'une enveloppe, de granules fortement comprimés ou de granules exempts de matière active.

16. Utilisation d'un dispositif pour la mise en oeuvre du procédé suivant l'une quelconque des revendications 1 à 15, comportant un récipient de mélange d'un volume d'au moins 500 ml et un outillage de mélange qui comporte au moins trois palettes en forme d'hélice disposées horizontalement, s'étendant à faible distance les unes des autres, sensiblement en travers de la totalité du fond du récipient, qui sont fixées à un arbre vertical et qui portent une ou plusieurs buses appropriées pour l'alimentation de l'agent d'humidification.

17. Utilisation suivant la revendication 16 caractérisée en ce que la forme du récipient de mélange est cylindrique, tronconique ou conique ou des combinaisons de ces formes, et les surfaces des parois et du corps du récipient sont lisses.

18. Utilisation suivant la revendication 16 ou 17 caractérisée en ce que le récipient de mélange comporte un outillage hachant sur la paroi du récipient dans le courant de matière le plus épais.

19. Utilisation suivant l'une des revendications 16 à 18 comportant un système de refroidissement et/ou des dispositifs de commande pour la mesure de paramètres du procédé nécessaires pour le déroulement de celui-ci et/ou pour la commande automatique du processus de fabrication.